# EUROPÄISCHE PATENTANMELDUNG

(11) **EP 1 280 163 A1**
(43) Veröffentlichungstag der Anmeldung: **29.01.2003**
(21) Anmeldenummer: 02016643.5
(22) Anmeldetag: 25.07.2002
(51) Int. Cl.: G21C 3/322

(54) **Verfahren zur Veränderung des Durchflusswiderstandes eines Siedewasserreaktor-Brennstabbündels**

(30) Priorität: 25.07.2001 DE 10136137; 13.12.2001 DE 10161256
(71) Anmelder: Framatome ANP GmbH, 91058 Erlangen (DE)
(72) Erfinder: Meier, Werner, 91538 Kunreuth (DE); Friedrich, Erhard, 90542 Eckental (DE)
(74) Vertreter: Mörtel & Höfner

(57) **Zusammenfassung**

Die Erfindung betrifft ein Verfahren zur Einstellung des Durchflusswiderstandes eines Siedewasser-Brennelementes mit einem Fuß (2), an dessen unterem Ende ein Zentrierkegel (3) angeordnet ist, der einen von wenigstens einer Einströmöffnung gebildeten Einströmquerschnitt aufweist. Es ist dadurch gekennzeichnet, dass ein lösbar am Fuß (2) fixierter Zentrierkegel (3) gegen einen Zentrierkegel (3) mit verändertem Einströmquerschnitt ausgetauscht wird.

## Beschreibung

Die Erfindung betrifft ein Verfahren zur Veränderung des Durchflusswiderstandes eines Siedewasser-Brennelementes. Ein solches Brennelement umfasst mehrere zu einem Bündel zusammengefasste Brennstäbe, die sich mit ihrem unteren Ende an einem Bauteil, dem Fuß abstützen. Am unteren Ende des Fußes ist ein Zentrierkegel angeordnet, der einen von wenigstens einer Einströmöffnung gebildeten Einströmquerschnitt aufweist. Im Einbauszustand liegt der Zentrierkegel in der oberen Öffnung eines Zuströmrohres. Die Oberseite des Fußes wird von einem Rückhaltegitter, dem sog. fuelguard gebildet. Zur Herstellung des Fußes mit seinem Zentrier- oder Einlassstern wird üblicherweise von einem im Schmiedeverfahren hergestellten Rohteil ausgegangen. Dabei wird an das untere Ende des Rohteiles eine etwa konisch zulaufende Ausbuchtung angeformt, in die im Zuge einer Nachbearbeitung des Schmiede-Rohteiles Öffnungen eingefräst werden. Die Außenabmessungen des Fußes sind standardisiert und beispielsweise für Brennelemente mit 10x10 Brennstäben ausgelegt.

Je nach Art und Formgestaltung der innerhalb des Brennelementes vorhandenen Einbauten, wie Abstandhalter, Brennelemente und Wasserkanal, ergeben sich unterschiedliche Strömungsverhältnisse bzw. -widerstände. Bei der Neuauslegung von Brennelementen ist es daher erforderlich, den Durchflusswiderstand des Fußes durch Variierung des Einströmquerschnitt des Zentrierkegels an das jeweilige Brennelement anzupassen. Um den für ein Brennelement optimalen Einströmquerschnitt herauszufinden werden herkömmlicherweise Strömungstests mit Füßen durchgeführt, an denen jeweils Zentrierkegel mit unterschiedlich gestalteten und/oder bemessenen Einströmquerschnitten einstückig angeformt sind. Diese Vorgehensweise ist mit einem hohen Herstellungs- und Materialaufwand verbunden, da für jede Variante eines Zentrierkegels ein kompletter Fuß gefertigt werden muss.

Eine Veränderung des Durchflusswiderstandes kann jedoch nicht nur bei der Herstellung eines Brennelementes, sondern auch nach der Inbetriebnahme eines Brennelementes im Zuge einer Revision erforderlich sein.

Aufgabe der Erfindung ist es, ein Verfahren zur Veränderung des Durchflusswiderstandes eines Siedewasser-Brennelementes vorzuschlagen, mit dem insbesondere die Einstellung des Durchflusswiderstandes während der Herstellung eines Brennelementes mit geringerem Aufwand möglich ist.

Diese Aufgabe wird durch die Merkmalskombination des Anspruches 1 gelöst.

Danach wird ein lösbar am Fuß (2) fixierter Zentrierkegel (3) gegen einen Zentrierkegel (3) mit verändertem Einströmquerschnitt ausgetauscht. Der Austausch kann dabei im Zuge der Herstellung eines Brennelementes oder gegebenenfalls auch nach dessen Inbetriebnahme erfolgen. Vorteilhaft im erstgenannten Fall ist, dass bei der Herstellung von Brennelementen für eine oder auch für verschiedene Kernkraftanlagen stets nur ein und dieselbe Fußbauform vorgehalten werden kann, wobei Variationen hinsichtlich des Durchflusswiderstandes mit Hilfe unterschiedlich gestalteter Zentrierkegel vorgenommen werden. Erfindungsgemäß kann bei einer Abweichung des gemessenen vom Soll-Durchflusswiderstand ein Strömungstest mit einem Zentrierkegel mit veränderter Einströmöffnung so lange wiederholt werden, bis der Soll-Durchflusswiderstand erreicht ist. Es wird dann die benötigte Anzahl Zentrierkegel mit dem ermittelten Durchflusswiderstand hergestellt und mit standardisierten Füßen verbunden. Es steht somit quasi ein Baukastensystem mit Füßen gleichbleibender, insbesondere für mehrere Kernkraftanlagen geeigneter Konstruktion und Zentrierkegeln mit unterschiedlichen Einströmquerschnitten zur Verfügung. Für den Fall, dass eine Veränderung des Durchflusswiderstand nicht nur bei der Brennelement-Herstellung sondern auch später gewünscht ist, wird ein Zentrierkegel mit einem auf die oben beschriebene Weise angepassten Einströmquerschnitt lösbar am Fuß fixiert. Er kann dann während einer Revision mit Hilfe eines Manipulators gegen einen Zentrierkegel mit verändertem Einströmquerschnitt ausgetauscht werden.

Zur Durchführung des erfindungsgemäßen Verfahrens geeignete Fuß- und Zentriersternkonstruktionen werden nun anhand der beigefügten Zeichnungen näher erläutert. Es zeigen:
- Fig.1: ein Brennelement in perspektivischer Darstellung
- Fig.2: in schematischer perspektivischer Darstellung die Anordnung mehrerer Brennelemente im Bereich des unteren Kerngitters,
- Fig.3: eine erste Variante eines Fußes mit noch nicht montiertem Zentrierkegel sowie mit einer in den Innenraum des Fußes einzuführenden Befestigungshülse,
- Fig.4: den Ausschnitt eines Querschnittes entsprechend Linie IV-IV in Fig.3,
- Fig.5: eine Ansicht in Richtung des Pfeiles V auf den fertigmontierten Fuß gemäß Fig.3,
- Fig.6: einen teilweise geschnittenen Ausschnitt eines Fußes mit einer zweiten Zentrierkegelvariante,
- Fig. 7: eine dritte Zentrierkegelvariante in einer Fig. 6 entsprechenden Darstellung.

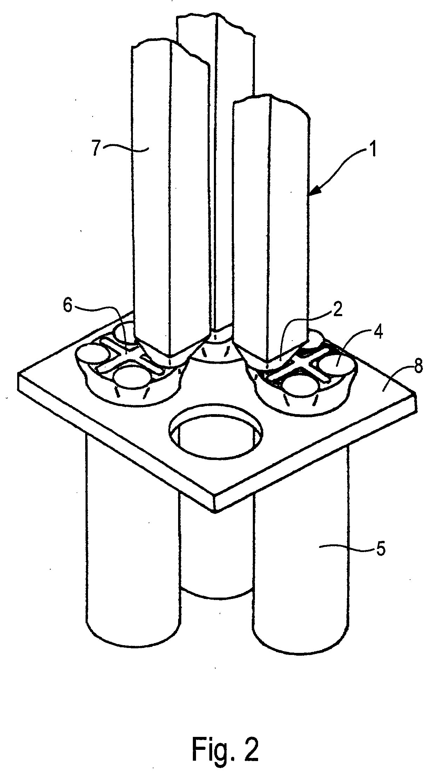

Wie Fig.2 zu entnehmen ist, liegen die Brennstäbe 11 des Brennelementes 1 eines Siedewasserreaktors mit ihrem Fuß 2 bzw. dem Zentrierkegel 3 (in Fig.2 nicht sichtbar) in einer von insgesamt vier Ausströmdüsen 4 ein, die jeweils am oberen Ende von Zuströmrohren 5 angeordnet sind. In den Zuströmrohren 5 sind weiterhin axial verschiebbare Steuerstäbe 6 vorhanden. Die Brennelemente 1 sind von einem Wasserkasten 7 umfasst, in dessen unterem Ende der Fuß 2 formschlüssig einliegt. Als tragendes Bauteil für die Brennelemente 1 und für die Zuströmrohre 5 dient das untere Kerngitter 8.

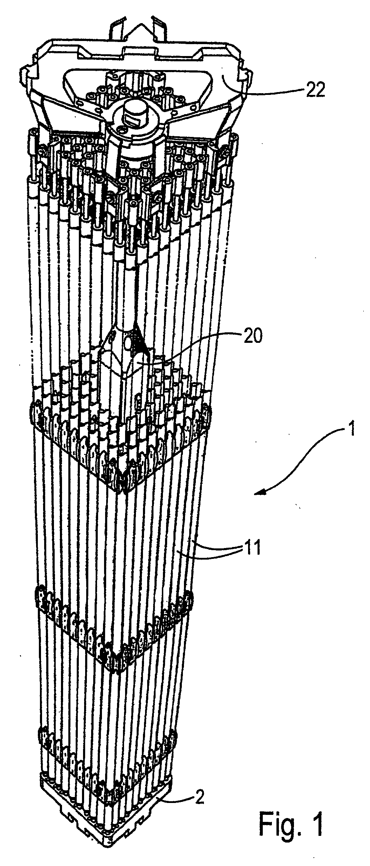

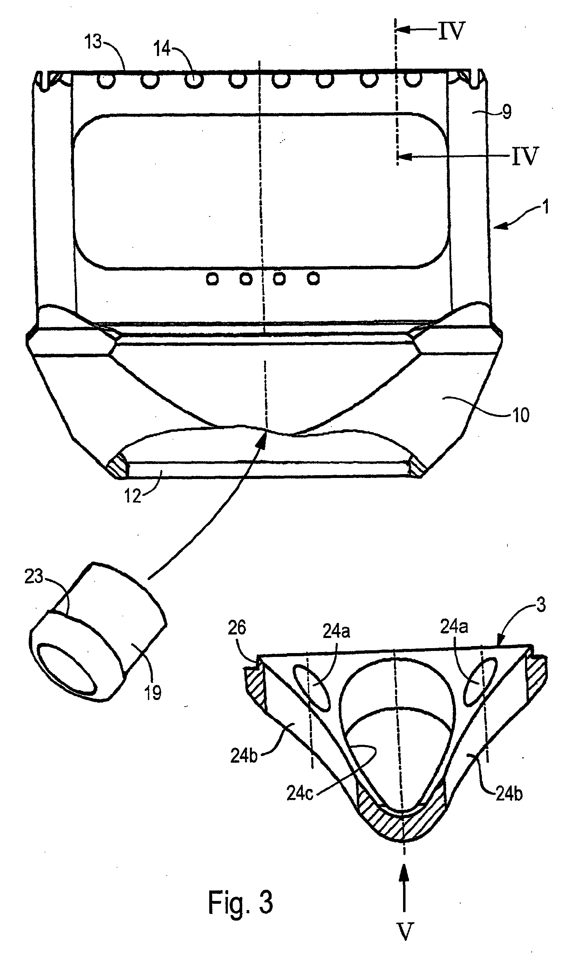

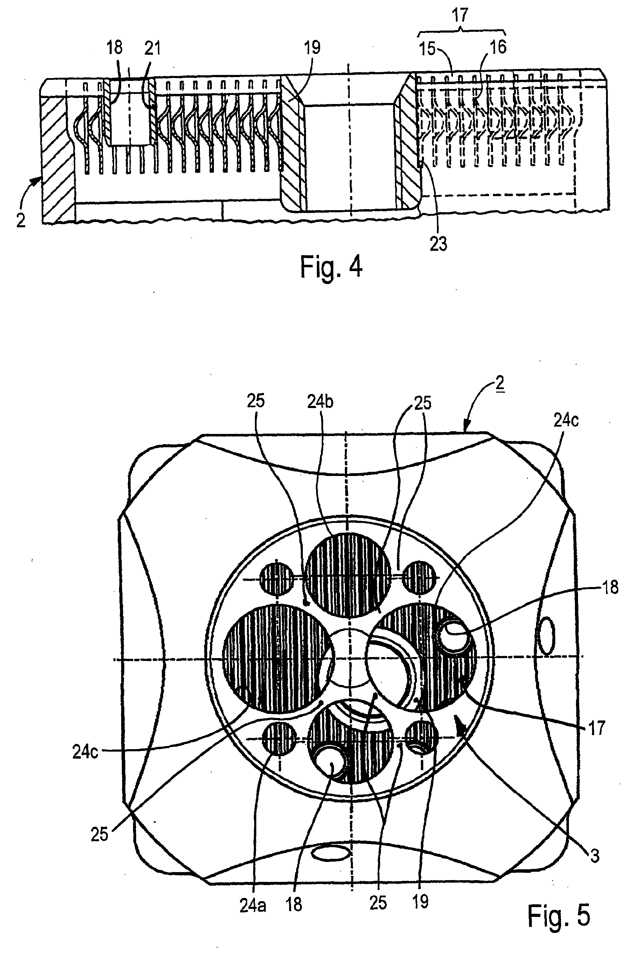

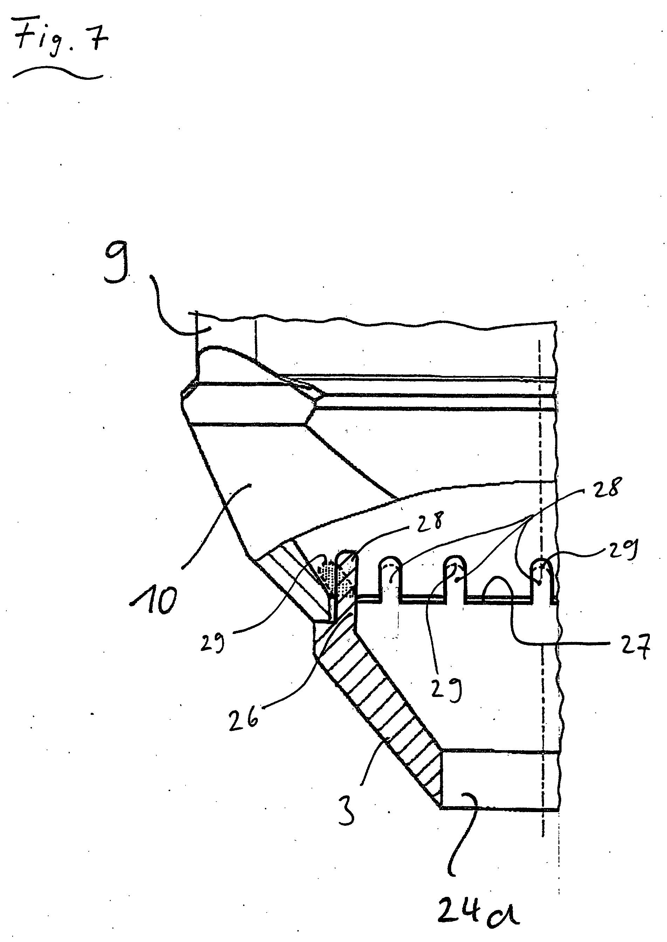

In Fig.3 ist ein Fuß 2 im Vormontagezustand gezeigt. Sein oberer Abschnitt 9 ist etwa kastenförmig ausgebildet und weist einen im wesentlichen quadratischen Querschnitt auf. An den Abschnitt 9 schließt sich ein sich nach unten verjüngender Abschnitt 10 an, in dessen Stirnseite eine kreisrunde Öffnung 12 vorhanden ist. Zwei sich gegenüber liegende Wände des oberen Abschnittes 9 weisen nahe der Fußoberkante Bohrungen 14 auf, die zur Halterung von Stiften 15 (Fig.4) dienen. In den beiden anderen Wänden des Abschnittes 9 sind Axialschlitze (nicht dargestellt) zur Aufnahme von Stegblechen 16 vorhanden. Die Stifte 15 und die Stegbleche 16 bilden zusammen das Rückhaltegitter 17. Bei der Herstellung des Fußes 2 werden in das Rückhaltegitter 17 mehrere Öffnungen eingearbeitet, in die Hülsen eingesetzt werden. Öffnungen 18 kleineren Durchmessers mit darin eingesetzten Hülsen 21 dienen zur Fixierung von teillangen Brennstäben. In eine exzentrisch angeordnete Öffnung größeren Durchmessers wird eine mit einem Innengewinde versehene Hülse 19 eingesetzt. In das Innengewinde der Hülse 19 wird der Wasserkanal 20 (siehe Fig.1) mit seinem unteren Ende eingeschraubt. Die Hülse 19 wird zwar mit den Stiften 15 und den Stegblechen 16 verlötet. Beim Herausnehmen eines Brennelements 1 aus einem Reaktor, bei dem es an seinem Kopf 22 (Fig.1) angefasst und nach oben bewegt wird, wird die Lötverbindung zwischen Hülse 19 und Rückhaltegitter 17 stark belastet. Aus Sicherheitsgründen wird daher zwischen Hülse 19 und Rückhaltegitter 17 ein axial wirksamer Hinterschnitt in Form einer am Umfang der Hülse ausgebildeten Radialschulter 23 vorgesehen. Die Radialschulter 23 bringt es mit sich, dass die Hülse 19 bei der Montage von der Innenseite des Rückhaltegitters her in die für sie vorgesehene Öffnung eingeführt werden muss. Wie in Fig.3 verdeutlicht ist, kann die Hülse 19 praktisch behinderungsfrei durch die stirnseitige Öffnung 12 des Fußes 2 eingeführt, in das Rückhaltegitter 17 eingesteckt und dort verlötet werden. Aufgrund des Fehlens des Zentrierkegels 3 können alle diese Arbeiten relativ behinderungsfrei ausgeführt werden. Nachdem die Hülse 19 montiert ist, wird der ein Zentrierkegel 3 mit einem dem jeweiligen Brennelement angepassten Einströmquerschnitt in die Öffnung 12 eingesetzt. Der Zentrierkegel 3 weist zu diesem Zweck an seiner Basis einen Abschnitt 26 mit zylinderförmiger Umfangsfläche und verringertem Umfang auf. Eine dauerhafte Fixierung erfolgt beispielsweise durch Verlöten. Soll der Zentrierstern 3a lösbar an einem Fuß fixiert werden, so kann dies beispielsweise auf die in Fig. 7 gezeigte Art geschehen. An der den Brennstäben 11 bzw. der nach oben weisenden Stirnseite 27 des Abschnittes 26 sind Laschen 28 angeformt, die im Vormontagezustand etwa rechtwinklig abstehen. Zur Fixierung werden die Laschen 28 radial nach außen umgebogen, was durch die gestrichelten Linien 29 in Fig. 7 angedeutet ist. Denkbar ist jedoch auch, den zylindrischen Abschnitt 26 des Zentriersterns (3) mit einem Außengewinde (nicht dargestellt) zu versehen, das in ein Innengewinde stellt) zu versehen, das in ein Innengewinde (nicht dargestellt) des Zentriersterns (3) eingeschraubt wird.

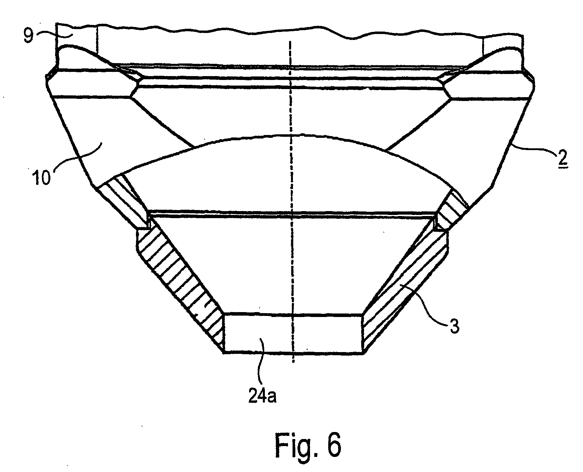

Der Zentrierkegel 3 ist im wesentlichen ein hohlkegelförmiges Gebilde, das beispielsweise durch Schmieden hergestellt ist. In ein solches Rohteil werden dann nachträglich Einströmöffnungen 24 beispielsweise durch Fräsen eingebracht. Wenn es sich herausstellen sollte, dass die gewählte Form und/oder der Gesamteinströmquerschnitt der Öffnungen nicht den gewünschten Druckverlust ergeben, kann ein weiteres Rohteil mit anders gestalteten Öffnungen versehen werden. Während beim herkömmlichen Arbeiten jeder "Fehlversuch" einen kompletten Fuß kostete beschränkt sich der Verlust nun lediglich auf einen mit relativ wenig Material- und Arbeitaufwand hergestellten Zentrierkegel beschränkt. Bei dem Ausführungsbeispiel nach Fig.3 und 5 sind insgesamt acht Einströmöffnungen, nämlich vier Einströmöffnungen 24a kleineren Durchmessers, zwei Einströmöffnungen 24b mittleren Durchmessers und zwei Einströmöffnungen 24c größeren Durchmessers vorhanden. In der Draufsicht nach Fig.5 spannen die Mittelpunkte der Einströmöffnungen 24a ein Rechteck auf, auf dessen kürzeren Seiten die Mittelpunkte der Einströmöffnungen 24b und auf dessen längeren Seiten die Mittelpunkte der Einströmöffnungen 24c, jeweils mittig, angeordnet sind. Wie insbesondere anhand Fig.5 erkennbar ist, bilden die zwischen den Öffnungen vorhandenen Stege 25 Einführschrägen, die ein problemloses einsetzen des Fußes 2 in eine Ausströmdüse 4 (Fig.2) gewährleisten. Die Anordnung der Einströmöffnungen 24 gemäß Fig.5 ist das Ergebnis von Durchströmungsversuchen, deren Ziel es ist, den Strömungswiderstand im Bereich des Zentrierkegels 3 zu optimieren, insbesondere möglichst gering zu halten. Bei derartigen Untersuchungen erfolgt eine schrittweise Annäherung an den optimalen Zustand. Dementsprechend ist eine stetige Anpassung bzw. Veränderung der Geometrie der Einströmöffnungen erforderlich. Dazu ist es aber nicht nötig, dass für die einzelnen Tests jeweils ein gesamter neuer Fuß hergestellt wird. Aufgrund der separaten Ausgestaltung des Zentrierkegels 3 können die erforderlichen Varianten mit geringem Fertigungs- und Materialaufwand hergestellt werden. Die in Fig.5 dargestellte Geometrie der Einströmöffnungen ist nur eine von einer Vielzahl, von den jeweiligen Strömungsverhältnissen eines Brennelementes abhängigen Varianten. Denkbar ist es beispielsweise auch, nur eine einzige zentrale Öffnung 24d vorzusehen (siehe Fig.6).

Der oben beschriebene Zentrierkegel kann auch bei einem Brennelement der bundle-in-basket-Bauweise vorgesehen sein. Bei einem solchen Brennelement ist das Rückhaltegitter ein separates Teil, an dem unterseits ein einen Zentrierkegel aufweisendes Übergangsstück fixiert ist.

### Bezugszeichenliste

- 1: Brennelement
- 2: Fuß
- 3: Zentrierkegel
- 4: Ausströmdüse
- 5: Zuströmrohr
- 6: Steuerstab
- 7: Wasserkasten
- 8: unteres Kerngitter
- 9: oberer Abschnitt
- 10: verjüngter Abschnitt
- 11: Brennstab
- 12: Öffnung
- 13: Fußoberkante
- 14: Bohrung
- 15: Stift
- 16: Stegblech
- 17: Rückhaltegitter
- 18: Öffnung
- 19: Hülse
- 20: Wasserkanal
- 21: Hülse
- 22: Kopf
- 23: Radialschulter
- 24: Einströmöffnung
- 25: Steg
- 26: Abschnitt
- 27: Stirnseite
- 28: Lasche
- 29: gestrichelte Linie

## Patentansprüche

1. Verfahren zur Einstellung des Durchflusswiderstandes eines Siedewasser-Brennelementes mit mehreren Brennstäben (11)und einem Fuß (2), an dessen unterem Ende ein Zentrierkegel (3) angeordnet ist, der einen von wenigstens einer Einströmöffnung (24) gebildeten Einströmquerschnitt aufweist,
**dadurch gekennzeichnet,**
**dass** ein lösbar am Fuß (2) fixierter Zentrierkegel (3) gegen einen Zentrierkegel (3) mit verändertem Einströmquerschnitt ausgetauscht wird.

2. Verfahren nach Anspruch 1,
**dadurch gekennzeichnet,**
**dass** bei der Herstellung eines Brennelements ein Fuß (2) mit einem lösbar daran fixierten Zentrierkegel (3) bereitgestellt und der Durchflusswiderstand dieses Fußes mit Hilfe von Strömungstests bestimmt wird, wobei bei einer Abweichung des gemessenen vom Soll-Durchflusswiderstand Strömungstests jeweils mit einem Zentrierkegel (3) veränderten Einströmquerschnitts so lange durchgeführt werden, bis der Soll-Durchflusswiderstand erreicht ist.
